# EUROPÄISCHE PATENTSCHRIFT

(11) **EP 2 234 906 B1**
(45) Veröffentlichungstag und Bekanntmachung des Hinweises auf die Patenterteilung: **08.01.2014**
(21) Anmeldenummer: 08867074.0
(22) Anmeldetag: 07.11.2008
(51) Int. Cl.: B65G 19/02, B65G 37/00, B65B 61/20

(54) **VORRICHTUNG UND VERFAHREN ZUM TRANSPORTIEREN VON GEFACHEN UND ZUM EINBRINGEN VON GEFACHEN IN BEHÄLTERGRUPPEN.**
DEVICE AND METHOD FOR TRANSPORTING DIVIDERS AND FOR INSERTING DIVIDERS IN CONTAINER GROUPS
DISPOSITIF ET PROCÉDÉ POUR TRANSPORTER DES CASIERS ET POUR INTRODUIRE DES CASIERS DANS DES GROUPES DE CONTENANTS

(30) Priorität: 21.12.2007 DE 102007062844
(43) Veröffentlichungstag der Anmeldung: 06.10.2010
(73) Patentinhaber: KHS GmbH, 44143 Dortmund (DE)
(72) Erfinder: JÖRISSEN, Michael, 47551 Bedburg-Hau (DE); JÖHREN, Thomas, 46397 Bocholt (DE); NITSCH, Thomas, 47533 Kleve (DE); BRUEKER, Alexander, 47546 Kalkar (DE)
(86) Internationale Anmeldenummer: PCT/EP2008/009426
(87) Internationale Veröffentlichungsnummer: WO 2009/083065

(56) Entgegenhaltungen:
- DE-A1- 10 353 103
- JP-A- 56 025 440
- US-A- 1 996 812
- US-A- 3 483 802
- US-B1- 6 569 072

## Beschreibung

Die Erfindung bezieht sich auf eine Transportvorrichtung gemäß Oberbegriff Patentanspruch 1 sowie auf eine Vorrichtung zum Einsetzen von Gefachen in Behältergruppen gemäß Oberbegriff Patentanspruch 1 sowie auf ein Verfahren zum Einsetzen von Gefachen in Behältergruppen gemäß Oberbegriff Patentanspruch 13.

Gefache im Sinne der Erfindung sind Gebilde, die aus wenigstens zwei sich kreuzenden und miteinander verbundenen flachen Gefachelementen, beispielswelse In Form von Zuschnitten aus Karton oder Pappe (auch Wellpappe und/oder auch mehrlagig) bestehen und in Flaschen- oder Behältergruppen derart eingesetzt werden, dass die einander benachbarten Behälter durch das jeweilige Gefach bzw. durch die Gefachelemente voneinander getrennt sind.

Eines der Gefachelemente wird im Sinne der Erfindung als Gefachlängselement bezeichnet. Das wenigstens eine weitere Element ist dann im Sinne der Erfindung ein Gefachquerelement. Ein Gefach für jeweils vier Behälter aufwelsende Behältergruppen besteht demnach aus lediglich zwei sich kreuzenden Gefachelementen. Ein Gefach für jeweils sechs Behälter aufwelsende Behältergruppen besteht dementsprechend aus einem Gefachlängselement und aus zweibeidseitig über dieses wegstehenden und voneinander beabstandeten Gefachquerelementen. Ein Gefach für jeweils acht Behälter aufweisende Behältergruppen besteht somit zumindest aus zwei voneinander beabstandeten und parallel zueinander angeordneten Gefachlängselementen und aus zwei diese Gefachlängselemente kreuzenden und voneinander beabstandeten parallelen Gefachquerelementen.

U.a. zur Reduzierung des Transport- und Lagervolumen ist es üblich, die Gefache zunächst im zusammengefalteten Zustand, d.h. jeweils mit den Gefachelementen dicht aufeinander liegend oder aber im noch nicht montierten Zustand bereitzuhalten und erst vor dem Einsetzen in die jeweilige Behältergruppe zu entfalten bzw. die einzelnen Gefachelemente zu dem jeweiligen Gefach zusammenzufügen. Zur Erzlelung höherer Leistungen (hohe Anzahl der je Zeiteinhelt mit einem Gefach versehenen Behältergruppen) ist es zweckmäßig, das Bereltstellen und Einsetzen der Gefache in die Behältergruppen vonelnander zu entkoppeln, d.h. hierfür unterschiedliche Stationen vorzusehen, wobei dann die an einer Station bereitgestellten Gefache über eine Transportvorrichtung an eine Station (Gefachübergabe- und Einsatzstation) zum Einsetzen der Gefache in die Behältergruppen transportiert werden.

Eine derartige Vorrichtung und Verfahrensablauf ist in der DE 103 53 103 A1 gezeigt, bei der die gleichförmigen Gefachelemente beim Antransport zum Einsatzort zusammengefügt bzw. aufgefaltet werden und auf einer Ebene oberhalb der Behälter mittels Schubbalken vorangetrieben werden, wobei der Schubbalken in Transportrichtung von hinten an dem Gefacheelement anliegt. Die Ebene senkt sich in einem zweiten Abschnitt, so dass die Gefachelemente zwischen darunter befindliche und parallel geförderte Behälter abgesenkbar sind.

Aufgabe der Erfindung ist es, eine Vorrichtung aufzuzeigen, mit der Gefache in besonders zuverlässiger Weise entlang einer Transportstrecke transportiert werden können. Zur Lösung dieser Aufgabe ist eine Vorrichtung entsprechend dem Patentanspruch 1 ausgebildet.

Ein Verfahren zum Einsetzen von Gefachen in Behältergruppen ist Gegenstand des Patentanspruchs 13.

Unter "Station zur Bereitstellung von Gefachen" ist im Sinne der Erfindung ganz allgemein eine Station oder Anlage zu verstehen, die u.a, eine Vorlage- und Zuführeinheit oder ein Magazin für flache Gefache (nicht aufgestellte und entfaltete Gefache) oder für einzelne Gefachelemente aufweist und durch Aufstellen und Entfalten bzw. durch Zusammenfügen die entfalteten Gefache in einer für das Einsetzen in die Behältergruppen geeigneten Form bereitstellt.

Unter "Gefachübergabe- und Einsetzstation" ist im Sinne der Erfindung ganz allgemein eine Station zu verstehen, die die ihr zugeführten entfalteten Gefache an eine bereitstehende Behältergruppe übergibt und dort einsetzt, sodass die einander benachbarten Behälter der Behältergruppe durch die Gefachelemente voneinander getrennt sind.

Die Gefachelemente sind bevorzugt Zuschnitte aus einem geeigneten Material, z.B. aus einer ein- oder mehrlagigen Pappe oder einem ein- oder mehrlagigen Karton.

Bei der Erfindung werden die Gefache durch die jeweils an ihrem in Förder- oder Transportrichtung vorderen Gefachquerelement angreifenden Mitnehmer in Transportrichtung bewegt, wodurch sich ein besonders sicherer und störungsfreier Transport der Gefache ergibt.

Weiterbildungen, Vorteile und Anwendungsmöglichkeiten der Erfindung ergeben sich auch aus der nachfolgenden Beschreibung von Ausführungsbeispielen und aus den Figuren.

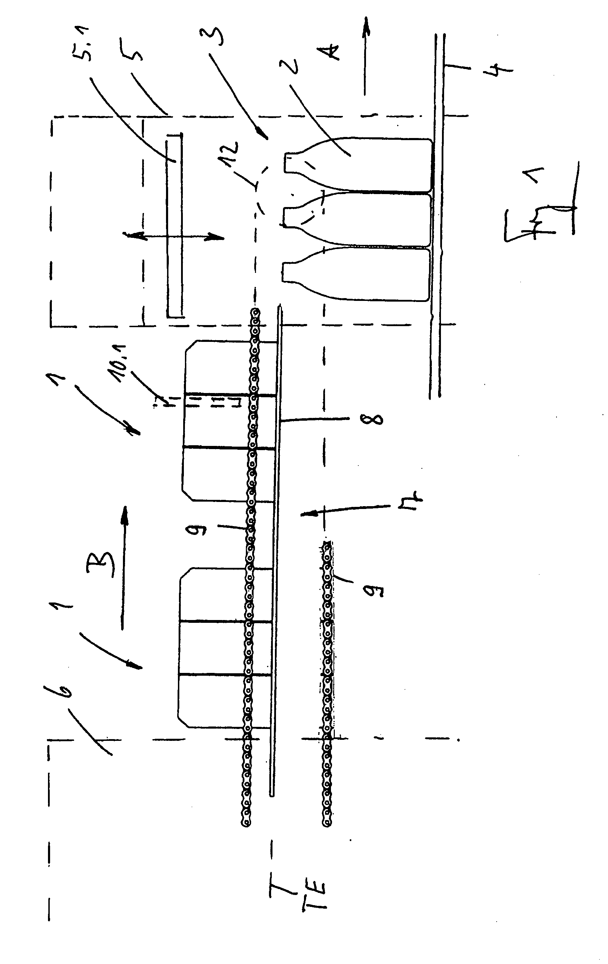

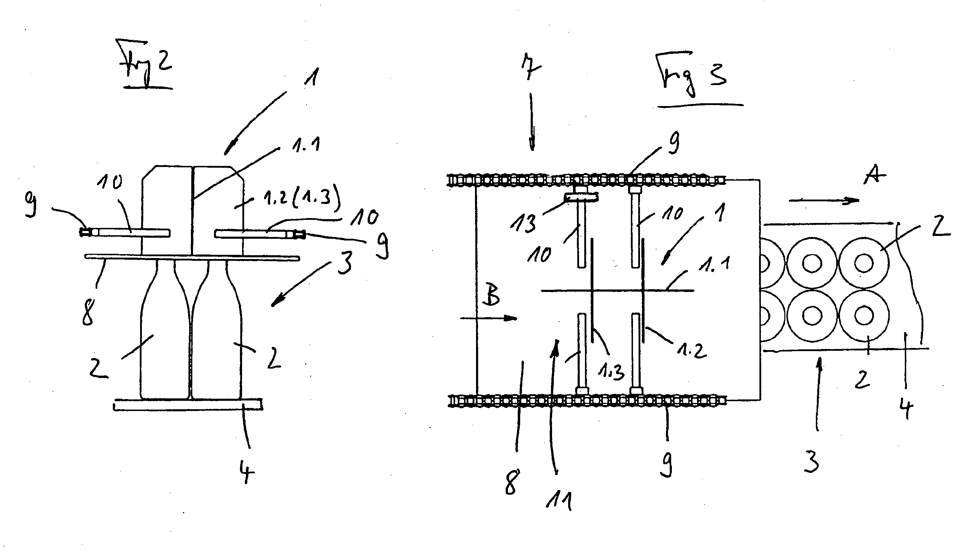

Die Erfindung wird im Folgenden anhand der Figuren 1 - 3, die jeweils in sehr vereinfachter Darstellung eine Transportvorrichtung für Gefache in Seitenansicht, in Stirnansicht sowie in Draufsicht zeigen, näher erläutert.

In den Figuren ist 1 ein Gefach, welches in bekannter Weise aus drei Gefachelementen bzw. aus drei flachen Zuschnitten 1.1, 1.2 und 1.3 aus einem geeigneten Flachmaterial. Die Zuschnitte 1.1 - 1.3 sind in bekannter Weise mit Schlitzen versehen und im Bereich dieser Schlitze durch Ineinanderstecken derart verbunden, dass der Zuschnitt 1.1 als Gefachlängselement die Längserstreckung des Gefaches 1 bildet und die Zuschnitte 1.2 und 1.3 als Gefachquerelemente jeweils mit gleicher Breite über die beiden Oberflächenseiten des Zuschnittes 1.1 wegstehen und mit ihren Oberflächenseiten in Ebenen angeordnet sind, die senkrecht zu den Ebenen der Oberflächenseiten des Zuschnittes 1.1 orientiert sind. Die Zuschnitte 1.1 - 1.3 besitzen jeweils die selbe Höhe. Das Gefach 1 ist zum Einsetzen zwischen die Flaschen oder Behälter 2 jeweils einer Behältergruppe 3 bestimmt, die in zwei Reihen jeweils drei Behälter 2 aufweist. Die Behälter 2 jeder Behältergruppe 3 sind aufrechtstehend, d.h. mit ihren Behälterachsen in vertikaler Richtung orientiert auf einem Transporteur 4 angeordnet, mit dem die Behältergruppen 3 in einem vorgegebenen Abstand zueinander in einer Transportrichtung A bewegt werden.

Das Einsetzen der Gefache 1 in die einzelnen Behältergruppen 3 erfolgt an einer Gefachübergabe- und Einsetzstation 5, die in der Figur 1 nur schematisch als Block dargestellt ist und an der die Behältergruppen 3 mit dem Transporteur 4 vorbeibewegt werden. Die Gefachübergabe- und Einsetzstation 5 weist u.a. eine Zentrier- und Absenkvorrichtung 5' auf, mit der das jeweilige Gefach 1 von einer Transportebene TE oberhalb der Behälter 2 abgenommen und durch Absenken zwischen die Behälter 2 der jeweiligen Behältergruppe 3 derart eingesetzt wird, dass der Zuschnitt 1.1 zwischen den beiden Behälterreihen und die Zuschnitte 1.2 und 1.3 jeweils zwischen den Behältern jeder Behälterreihe der Behältergruppe 3 aufgenommen sind. Eine derartige Gefäßübergabe- und Einsetzstation ist beispielsweise in der EP 1 544 113 beschrieben.

Die Gefache 1 werden der Gefachübergabe- und Einsetzstation 5 von einer in der Figur 1 ebenfalls nur schematisch als Block dargestellten Station 6 über eine Transportvorrichtung 7 zugeführt, die bei der dargestellten Ausführungsform u.a. eine in der Transportebene TE angeordnete, horizontale oder im Wesentlichen horizontale Gleitfläche 8 sowie zwei Transportelemente 9 aufweist. Diese sind jeweils an einer sich in Transportrichtung B der Transportvorrichtung 7 erstreckenden Längsseite der beispielsweise von einem Boden oder Gleitblech gebildeten Gleitfläche 8 vorgesehen und mit ihren Schlaufen parallel zueinander in jeweils einer vertikalen Ebene angeordnet. An den Transportelementen 9 sind fingerartige Mitnehmer 10 befestigt, und zwar mit einem Ende derart, dass diese Mitnehmer 10 auf der sich in Transportrichtung B bewegenden oberen Schlaufenlänge jedes Transportelementes 9 mit Abstand oberhalb der Oberseite der Gleitfläche 8 angeordnet sind. Die Mitnehmer 10 sind bei der dargestellten Ausführungsform an jedem Transportelement 9 jeweils paarweise vorgesehen, d.h. in Gruppen 11 mit jeweils zwei in Umlaufrichtung des Transportelementes 9 aufeinander folgenden Mitnehmern 10, wobei die Gruppen 11 der Mitnehmer 10 in Bewegungsrichtung des jeweiligen Transportelementes 9 einen Abstand voneinander aufweisen, der wenigstens um den Faktor Zwei größer ist als der Abstand, den die Mitnehmer 10 in jeder Gruppe 11 aufweisen.

Die Mitnehmer 10 sind an den synchron und gleichsinnig umlaufenden Transportelementen 9 weiterhin so vorgesehen, dass jedem Mitnehmer 10 an einem Transportelement 9 ein Mitnehmer 10 am anderen Transportelement achsgleich gegenüberliegt und die freien Enden dieser Mitnehmer in einer horizontalen Achse senkrecht zur Transportrichtung B voneinander beabstandet sind.

Von der Einrichtung 6 in der beispielsweise in einem oder mehreren Magazinen die Gefache 1 im zusammengefalteten Zustand, d.h. mit den Zuschnitten 1.1 - 1.3 flach aufeinander liegend oder aber die Zuschnitte 1.1 - 1.3 einzeln bereitstehen, werden die aufgefalteten Gefache 1, d.h. die Gefache 1 mit den den Zuschnitt 1.1 kreuzenden und senkrecht zu diesem angeordneten Zuschnitten 1.2 und 1.3 auf die Oberseite der Gleitfläche 8 so aufgestellt, dass sämtliche Zuschnitte 1.1 - 1.3 mit ihren Ebenen senkrecht zur Ebene der Gleitfläche 8 orientiert sind, d.h. in vertikalen oder im Wesentlichen in vertikalen Ebenen angeordnet sind, der Zuschnitt 1.1 in Transportrichtung B orientiert ist und jeweils zwei einander senkrecht zur Transportrichtung B gegenüberliegende Mitnehmer 10 gegen die bezogen auf die Transportrichtung B rückwärtige Seite des in Transportrichtung B vorderen Zuschnittes 1.2 anliegen. Weiterhin befinden sich zwei sich senkrecht zur Transportrichtung B einander gegenüberliegende Mitnehmer 10 der Mitnehmergruppe 11 an der bezogen auf die Transportrichtung B rückwärtigen Seite des Zuschnittes 1.3, allerdings von dieser Rückseite zunächst beabstandet. Hierfür ist der Abstand, den die Mitnehmer 10 in jeder Gruppe 11 in Transportrichtung B voneinander aufweisen, etwas größer als der Abstand der Zuschnitte 1.1 und 1.3 der Gefache 1. Die Gefache 1 werden also an den bezogen auf die Transportrichtung B vor dem Massenschwerpunkt der Gefache 1 angeordneten Gefachquerelementen oder Zuschnitten 1.2 mit den Mitnehmern 10 geschoben entlang der Transportebene TE bewegt, wodurch durch Selbstausrichtung insbesondere auch ein Verdrehen der Gefache 1 verhindert ist und somit an der Transportstrecke keine seitlichen Führungen für die Gefache 1 erforderlich sind.

Bei umlaufenden Transportelementen 9 wird somit jedes in der Station 6 auf die Gleitfläche 8 aufgestelltes Gefach 1 von der Station 6 an die Gefachübergabe- und Einsetzstation 5 bewegt, und zwar durch Vorwärtsschieben mit den Mitnehmern 10 am vorderen Zuschnitt 1.2. Im Bereich der Gefachübergabe und Einsetzstation 5 befindet sich ein in der Figur 1 mit unterbrochenen Linien angedeutetes, angetriebenes Umlenkrad für jedes Transportelement 9 in der Weise, dass bei Erreichen der Gefachübergabe- und Einsetzstation 5 die bis dahin gegen den Zuschnitt 1.2 anliegenden Mitnehmer 10 durch Abtauchen außer Eingriff mit dem Gefach 1 kommen und nunmehr das Gefach 1 durch die gegen den Zuschnitt 1.3 zur Anlage kommenden Mitnehmer 10 vollständig in die Gefachübergabe- und Einsetzstation 5 eingeschoben wird.

Um ein sicheres Bewegen der Gefache 1 auf der Transportvorrichtung zu gewährleisten ist die Anordnung so getroffen, dass die Mitnehmer 10 mit einem geringen Abstand von der Oberseite der Gleitfläche 8 gegen das jeweilige Gefach 1 anliegen, d.h. der Abstand, den die Mitnehmer 10 von der Oberseite der Gleitfläche 8 aufweisen, ist um ein Vielfaches kleiner als die Höhe der Gefache 1, d.h. als der Abstand, den die oberen Ränder der Zuschnitte 1.1 - 1.3 von der Gleitfläche 8 besitzen.

An der Station 6 sind die beiden Transportelemente 9 beispielsweise derart geführt, dass die Mitnehmer 10 jeweils von oben oder von unten her in das jeweilige, an der Station 6 bereitgestellte Gefach eingreifen.

Es versteht sich, dass die Transportvorrichtung 7 so ausgebildet ist, dass eine sichere Übergabe jedes Gefaches 1 an die Gefachübergabe- und Einsetzstation 5 bzw. an das dortige Gefachzentrier- und Absenkelement 5.1 gewährleistet ist. Hierfür ist die Transportvorrichtung 7 bei der dargestellten Ausführungsform so ausgebildet, dass sich die von den beiden Transportelementen 9 gebildeten Schlaufen über das der Gefachübergabe- und Einsetzstation 5 zugeordnete Ende der Gleitfläche 8 hinausragen. Weiterhin sind Maßnahmen getroffen, die ein Abkippen des jeweiligen Gefaches 1 an dem betreffenden Ende der Gleitfläche 8 verhindern. Diese Mittel sind beispielsweise die Gefache 1 unterstützende Mitnahme- oder Führungselemente, beispielsweise in Form von Tragarmen oder Tragstegen.

Die Erfindung wurde voranstehend an Ausführungsbeispielen beschrieben. Es versteht sich, dass Änderungen sowie Abwandlungen möglich sind, ohne dass dadurch der der Erfindung zugrunde liegende Erfindungsgedanke verlassen wird.

So wurde vorstehend davon ausgegangen, dass die fingerartigen Mitnehmer 10 mit ihrer Längserstreckung horizontal oder im Wesentlichen horizontal senkrecht zur Transportrichtung B orientiert sind. Es besteht aber auch die Möglichkeit, die umlaufenden Transportelement 9 oberhalb der Transportebene TE in einem Abstand vorzusehen, der größer ist als die Höhe der Gefache 1 und die Mitnehmer an diesen Transportelementen dann so anzuordnen, dass sie jeweils von oben her in die Gefache 1 eingreifen, wie dies in der Figur 1 mit der unterbrochenen Linie 10.1 dargestellt ist. In analoger Weise ist es dann beispielsweise auch möglich, die umlaufenden Transportelemente 9 unterhalb der Transportebene TE anzuordnen, wobei die Mitnehmer 10 dann bei geteiltem Boden oder geteilter Gleitfläche 8 von unten her in die Gefache 1 eingreifen.

Gemäß einen Ausführungsform, die nicht Teil der vorliegenden Erfindung ist, sind die Mitnehmer 10 oder diesen entsprechenden Mitnehmer mit Haftmitteln versehen, sodass die Gefache 1 an diesen Mitnehmern über die Haftmitteln gehalten sind. Als Haftmittel eignen sich beispielsweise auch sogenannte Gecko-Strukturen, d.h. von einer Vielzahl von Mikro-Vorsprüngen gebildete Strukturen an den Mitnehmern 10, an denen dann die Gefache 1 mit Van-der-Waals-Kräften gehalten sind. Das Lösen der Gefache 1 von den Mitnehmern 10 erfolgt dann an der Gefachübergabe- und Einsetzstation 5 beispielsweise durch Schwenken und/oder Drehen der Mitnehmer 10, die hierfür an dem jeweiligen Transportelement 9 schwenk- oder drehbar gelagert und beispielsweise mit einem Steuerrad 13 versehen, welches sich an der Gefachübergabe- und Einsetzstation an einem Steuerelement oder an einer Führung, beispielsweise an einer zahnstangenartigen Führung abwälzt und dadurch ein Drehen des Mitnehmers 10 um seine Achse bewirkt.

### Bezugszeichenliste

- 1: Gefach
- 1.1 - 1.3: Zuschnitt
- 2: Behälter
- 3: Behältergruppe
- 4: Transporteur für die Behälter 2 bzw. Behältergruppe 3
- 5: Gefachübergabe- und Einsetzstation
- 5.1: Gefachzentrier- und Absenkelement
- 6: Station zum Bereitstellen der Gefache 1
- 7: Transportvorrichtung für die Gefache 1
- 8: Gleitfläche oder Boden
- 9: umlaufendes Transportelement, z.B. Transportkette
- 10, 10.1: Mitnehmer
- 11: Mitnehmergruppe
- 12: Umlenkrad
- 13: Steuerrad an den Mitnehmer 10
- A: Transportrichtung des Transporteurs 4
- B: Transportrichtung der Transportvorrichtung 7
- TE: Transportebene

## Patentansprüche

1. Vorrichtung zum Einsetzen von Gefachen (1), bestehend aus mindestens einem Gefachlängselement (1.1) und mindestens zwei dieses kreuzende und voneinander beabstandeten Gefachquerelementen (1.2, 1.3), in Behältergruppen (3) aus Flaschen oder dergleichen Behältern (2), mit einem Transporteur (4) zum Transportieren von Behältergruppen (3), mit einer Station (6) zur Bereitstellung der Gefache (1), mit einer sich an diese Station (6) anschließenden, von einer Transportvorrichtung (7) zum Transportieren von Gefachen (1) gebildeten Transportstrecke sowie mit einer sich an die Transportstrecke anschließenden Gefachübergabe und Einsetzstation (5) zum Einsetzen der Gefache (1) in die Behältergruppen (3) von oben, wobei die Transportvorrichtung (7) wenigstens ein umlaufend angetriebenes Transportelement (9) mit Mitnehmern (10) zum Bewegen bzw. Mitführen der Gefache (1) in einer Transportrichtung (B) aufweist, wobei die Transportvorrichtung (7) wenigstens eine Gleitfläche (8) aufweist, die eine Transportebene (TE) bildet und auf der die Gefache (1) aufstehend und gleitend in Transportrichtung (B) bewegbar sind, welche oberhalb dem Transporteur (4) für die Behältergruppen (3) angeordnet ist, **dadurch gekennzeichnet, dass** die Mitnehmer (10) fingerartig ausgebildet sind und in Gruppen (11) vorgesehen sind, wobei jede Mitnehmergruppe (11) wenigstens zwei Paare von quer zur Transportrichtung (B) versetzten Mitnehmern (10) aufweist, und die Paare von Mitnehmern (10) inTransportrichtung (B) gegeneinander versetzt sind, und wobei die wenigstens zweiPaare von Mitnehmern (10) in Transportrichtung (B) einen Abstand voneinander aufweisen, der gleich, vorzugsweise aber etwas größer ist als der Abstand, den die Gefachquerelemente (1.2, 1.3) jedes Gefachs (1) voneinander besitzen, so dass die Mitnehmer (10) gegen die auf die Transportrichtung (B) rückwärtige Seite der Gefachquerelemente (1.2, 1.3) anlegbar sind und das Gefach (1) hierdurch auf die Gleitfläche (8) schiebbar ist.

2. Vorrichtung nach Anspruch 1, **dadurch gekennzeichnet, dass** an der von der Transportvorrichtung (7) gebildeten Transportstrecke zwei endlos umlaufend angetriebene Transportelemente (9) mit Mitnehmern (10) vorgesehen sind, und dass die Mitnehmer (10) an dem einen Transportelement (9) mit den Mitnehmern (10) am anderen Transportelement (9) die Gruppen bilden.

3. Vorrichtung nach Anspruch 1 oder 2, **dadurch gekennzeichnet, dass** die Mitnehmer (10) für einen Eingriff in das jeweilige Gefach (1) von der Seite der ausgebildet sind.

4. Vorrichtung nach Anspruch 1 oder 2, **dadurch gekennzeichnet, dass** die Mitnehmer (10) für einen Eingriff In das jeweilige Gefach (1) von unten her ausgebildet ist.

5. Vorrichtung nach Anspruch 1 oder 2, **dadurch gekennzeichnet, dass** die Mitnehmer (10) für einen Eingriff in das jeweilige Gefach (1) von oben her ausgebildet sind.

6. Vorrichtung nach einem der vorhergehenden Ansprüche, **dadurch gekennzeichnet, dass** die beiden umlaufenden Transportelemente (9) beidseltig von der von der Transportvorrichtung (7) gebildeten Transportstrecke vorgesehen sind.

7. Vorrichtung nach Anspruch 4, **dadurch gekennzeichnet, dass** das wenigstens eine, die Mitnehmer (10) aufweisende Transportelement (9) unterhalb der Transportebene (TE) der Transportvorrichtung (7) angeordnet ist,

8. Vorrichtung nach Anspruch 5, **dadurch gekennzeichnet, dass** das wenigstens eine, die Mitnehmer (10) aufweisende Transportelement (9) oberhalb der Bewegungsbahn der auf der Transportebene (TE) bewegten Gefache (1) angeordnet ist.

9. Vorrichtung nach Anspruch 3, **dadurch gekennzeichnet, dass** die paarweise angeordneten Mitnehmer (10) achsgleich oder im Wesentlichen achsgleich miteinander vorgesehen sind.

10. Vorrichtung nach Anspruch 3, **dadurch gekennzeichnet, dass** die fingerartigen Mitnehmer horizontal oder im Wesentlichen horizontal ausgerichtet sind.

11. Vorrichtung nach Anspruch 4 oder 5, **dadurch gekennzeichnet, dass** die fingerartigen Mitnehmer vertikal oder im Wesentlichen vertikal ausgerichtet sind.

12. Vorrichtung nach einem der vorhergehenden Ansprüche, **dadurch gekennzeichnet, dass** an dem der Aufgabe (6) entfernt liegenden Ende der von der Transportvorrichtung (7) gebildeten Transportstrecke die Gefache (1) führende und/oder stützende Elemente vorgesehen sind, um ein unerwünschtes Abkippen der Gefache (1) zu vermelden.

13. Verfahren zum Einsetzen von Gefachen (1), die jeweils aus wenigstens einem Gefachlängselement (1.1) und aus wenigstens zwei mit diesem verbundenen und dieses kreuzenden und voneinander beabstandeten Gefachquerelementen (1.2, 1.3) bestehen, in Behältergruppen (3) aus Flaschen oder dergleichen Behältern (2), **dadurch gekennzelchnet,** dass eine Vorrichtung nach einem der vorgenannten Ansprüche 1 - 12 verwendet wird, wobei jedes Gefach (1) mit einer Mitnehmergruppe (11) in der Transportrichtung (B) bewegt wird.

14. Verfahren nach Anspruch 13, **dadurch gekennzeichnet, dass** die Gefache (1) auf der Gleitfläche (8) der Transportvorrichtung (7) aufstehend und gleitend in Transportrichtung (B) bewegt werden.

15. Verfahren nach Anspruch 13 oder 14, **dadurch gekennzeichnet, dass** die Gefache (1) an der Station (6) bereitgestellt und auf die Transportstrecke der Transportvorrichtung (7) aufgesetzt werden und an der sich an die Transportstrecke der Transportvorrichtung (7) anschließenden Gefachübergabe- und Einsetzstation (5) in Behältergruppen (3) eingesetzt werden.

16. Verfahren nach einem der vorhergehenden Ansprüche 13 bis 15, **gekennzeichnet durch** die Verwendung von Mitnehmern (10), die für einen Eingriff in das jeweilige Gefach (1) von der Seite der ausgebildet sind.

17. Verfahren nach einem der vorhergehenden Ansprüche 13 bis 15, **gekennzeichnet durch** die Verwendung von Mitnehmern (10), die für einen Eingriff in das jeweilige Gefach (1) von unten her ausgebildet ist.

18. Verfahren nach einem der vorhergehenden Ansprüche 13 bis 15, **gekennzeichnet durch** die Verwendung von Mitnehmern (10), die für einen Eingriff in das jeweilige Gefach (1) von oben her ausgebildet sind.

## Claims

1. Device for inserting dividers (1), consisting of at least one longitudinal divider element (1.1) and at least two transverse divider elements (1.2, 1.3) which intersect said longitudinal divider element and are spaced apart, in container groups (3) of bottles or similar containers (2), having a transporter (4) for transporting container groups (3), having a station (6) for providing the dividers (1), having a transport section which follows this station (6) and is formed by a transport device (7) for transporting dividers (1) and having, following the transport section, a divider handover and insertion station (5) for inserting the dividers (1) in the container groups (3) from above, wherein the transport device (7) comprises at least one circumferentially driven transport element (9) having dogs (10) for moving or guiding the dividers (1) in a transport direction (B), wherein the transport device (7) comprises at least one sliding surface (8) which forms one transport level (TE) and on which the dividers (1) can be moved upstanding and slidingly in the transport direction (B), which is arranged above the transporter (4) for the container groups (3), **characterised in that** the dogs (10) are of a finger-like design and are provided in groups (11), wherein each group of dogs (11) comprises at least two pairs of dogs (10) offset transversely to the transport direction (B), and the pairs of dogs (10) in the transport direction (B) are offset against each other, and wherein the at least two pairs of dogs (10) in the transport direction (B) have a distance from each other which is the same as, but preferably a little greater than, the distance of the transverse divider elements (1.2, 1.3) of each divider (1) from each other, so that the dogs (10) can be placed against the back side, seen in the transport direction (B), of the transverse divider elements (1.2, 1.3) and the divider (1) can hereby be pushed onto the sliding surface (8).

2. Device according to claim 1, **characterised in that**, at the transport section formed by the transport device (7), two continuously circumferentially driven transport elements (9) having dogs (10) are provided, and that the dogs (10) at the one transport element (9) form the groups with the dogs (10) at the other transport element (9).

3. Device according to claim 1 or 2, **characterised in that** the dogs (10) are designed to engage the respective divider (1) from the side.

4. Device according to claim 1 or 2, **characterised in that** the dogs (10) are designed to engage the respective divider (1) from below.

5. Device according to claim 1 or 2, **characterised in that** the dogs (10) are designed to engage the respective divider (1) from above.

6. Device according to any one of the preceding claims, **characterised in that** the two circumferential transport elements (9) are provided on both sides of the transport section formed by the transport device (7).

7. Device according to claim 4, **characterised in that** the at least one transport element (9) having the dogs (10) is arranged below the transport level (TE) of the transport device (7).

8. Device according to claim 5, **characterised in that** the at least one transport element (9) having the dogs (10) is arranged above the motion path of the dividers (1) moved on the transport level (TE).

9. Device according to claim 3, **characterised in that** the dogs (10) arranged in pairs are provided in the same axis or substantially in the same axis to each other.

10. Device according to claim 3, **characterised in that** the finger-like dogs are aligned horizontally or substantially horizontally.

11. Device according to claim 4 or 5, **characterised in that** the finger-like dogs are aligned vertically or substantially vertically.

12. Device according to any one of the preceding claims, **characterised in that** at the end, which is located remote from the feed (6), of the transport section formed by the transport device (7), elements guiding and/or supporting the dividers (1) are provided in order to avoid unwanted tipping of the dividers (1).

13. Method for inserting dividers (1), each consisting of at least one longitudinal divider element (1.1) and of at least two transverse divider elements (1.2, 1.3) which are connected to and intersect said longitudinal divider element and are spaced apart, in container groups (3) of bottles or similar containers (2), **characterised in that** a device according to one of the preceding claims 1-12 is used, wherein each divider (1) with a group of dogs (11) is moved in the transport direction (B).

14. Method according to claim 13, **characterised in that** the dividers (1) on the sliding surface (8) of the transport device (7) are moved upstanding and slidingly in the transport direction (B).

15. Method according to claim 13 or 14, **characterised in that** the dividers (1) are provided at the station (6) and are placed on the transport section of the transport device (7) and are inserted at the divider handover and insertion station (5), which follows the transport section of the transport device (7), in container groups (3).

16. Method according to any one of the preceding claims 13 to 15, **characterised by** the use of dogs (10) designed to engage the respective divider (1) from the side.

17. Method according to any one of the preceding claims 13 to 15, **characterised by** the use of dogs (10) designed to engage the respective divider (1) from below.

18. Method according to any one of the preceding claims 13 to 15, **characterised by** the use of dogs (10) designed to engage the respective divider (1) from above.

## Revendications

1. Dispositif permettant d'insérer des compartiments (1), formés par au moins un élément longitudinal (1.1) et au moins deux éléments transversaux (1.2, 1.3) écartés l'un de l'autre et disposés en croix par rapport à l'élément longitudinal, dans des groupes de récipients (3) formés par des bouteilles ou des récipients (2) similaires, comportant un transporteur (4) destiné à transporter les groupes de récipients (3), comportant un poste (6) de mise à disposition des compartiments (1), comportant une voie de transport, dans le prolongement dudit poste (6), formée par un dispositif de transport (7) destiné à transporter les compartiments (1), et comportant un poste de transfert et de mise en place (5), dans le prolongement de la voie de transport, destiné à insérer les compartiments (1) par le haut dans les groupes de récipients (3), ledit dispositif de transport (7) comportant au moins un élément de transport (9) entraîné en rotation et muni d'entraîneurs (10) pour déplacer et entraîner les compartiments (1) dans une direction de transport (B), ledit dispositif de transport (7) comportant au moins une surface de glissement (8), qui forme un plan de transport (TE) et sur laquelle les compartiments (1) peuvent être déplacés en glissant et en position verticale dans la direction de transport (B), laquelle est disposée au-dessus du transporteur (4) pour les groupes de récipients (3), **caractérisé en ce que** les entraîneurs (10) sont réalisés en forme de doigts et sont prévus en groupes (11), chaque groupe d'entraîneurs (11) comportant au moins deux paires avec des entraîneurs (10) décalés transversalement par rapport à la direction de transport (B), et lesdites paires d'entraîneurs (10) sont décalées les unes par rapport aux autres dans la direction de transport (B), et lesdites au moins deux paires d'entraîneurs (10) sont éloignées l'une de l'autre dans la direction de transport (B) selon une distance qui est égale, mais de préférence quelque peu supérieure à la distance entre les éléments transversaux (1.2, 1.3) de chaque compartiment (1), de telle sorte que les entraîneurs (10) peuvent prendre appui contre la face arrière, par référence à la direction de transport (B), des éléments transversaux (1.2, 1.3) et, de ce fait, le compartiment (1) est apte à glisser sur la surface de glissement (8).

2. Dispositif selon la revendication 1, **caractérisé en ce que** sur la voie de transport formée par le dispositif de transport (7) sont prévus deux éléments de transport (9) entraînés en rotation en continu et munis d'entraîneurs (10), et **en ce que** les entraîneurs (10) sur l'un des éléments de transport (9) forment les groupes avec les entraîneurs (10) de l'autre élément de transport (9).

3. Dispositif selon la revendication 1 ou 2, **caractérisé en ce que** les entraîneurs (10) sont configurés pour entrer en prise par le côté dans le compartiment (1) respectif.

4. Dispositif selon la revendication 1 ou 2, **caractérisé en ce que** les entraîneurs (10) sont configurés pour entrer en prise par le bas dans le compartiment (1) respectif.

5. Dispositif selon la revendication 1 ou 2, **caractérisé en ce que** les entraîneurs (10) sont configurés pour entrer en prise par le haut dans le compartiment (1) respectif.

6. Dispositif selon l'une quelconque des revendications précédentes, **caractérisé en ce que** les deux éléments de transport (9) en rotation sont prévus de part et d'autre de la voie de transport formée par le dispositif de transport (7).

7. Dispositif selon la revendication 4, **caractérisé en ce que** ledit au moins un élément de transport (9) muni des entraîneurs (10) est disposé au-dessous du plan de transport (TE) du dispositif de transport (7).

8. Dispositif selon la revendication 5, **caractérisé en ce que** ledit au moins un élément de transport (9) muni des entraîneurs (10) est disposé au-dessus de la voie de déplacement des compartiments (1) déplacés sur le plan de transport (TE).

9. Dispositif selon la revendication 3, **caractérisé en ce que** les entraîneurs (10) disposés par paires sont prévus entre eux dans le même axe ou sensiblement dans le même axe.

10. Dispositif selon la revendication 3, **caractérisé en ce que** les entraîneurs en forme de doigts sont orientés horizontalement ou sensiblement horizontalement.

11. Dispositif selon la revendication 4 ou 5, **caractérisé en ce que** les entraîneurs en forme de doigts sont orientés verticalement ou sensiblement verticalement.

12. Dispositif selon l'une quelconque des revendications précédentes, **caractérisé en ce qu'**au niveau de l'extrémité, éloignée du poste de mise à disposition (6), de la voie de transport formée par le dispositif de transport (7) sont prévus des éléments guidant et/ou supportant les compartiments (1), afin d'empêcher un basculement indésirable des compartiments (1).

13. Procédé permettant d'insérer des compartiments (1), formés chacun par au moins un élément longitudinal (1.1) et au moins deux éléments transversaux (1.2, 1.3) reliés à celui-ci et disposés en croix par rapport à celui-ci et écartés l'un de l'autre, dans des groupes de récipients (3) formés par des bouteilles ou des récipients (2) similaires, **caractérisé en ce que** l'on utilise un dispositif selon l'une quelconque des revendications 1 à 12, chaque compartiment (1) étant déplacé par un groupe d'entraîneurs (11) dans la direction de transport (B).

14. Procédé selon la revendication 13, **caractérisé en ce que** les compartiments (1) sont déplacés en glissant et en position verticale dans la direction de transport (B) sur la surface de glissement (8) du dispositif de transport (7).

15. Procédé selon la revendication 13 ou 14, **caractérisé en ce que** les compartiments (1) sont mis à disposition au niveau du poste (6) et sont posés sur la voie de transport du dispositif de transport (7) et sont insérés dans des groupes de récipients (3) au niveau du poste de transfert et mise en place (5) monté dans le prolongement de la voie de transport du dispositif de transport (7).

16. Procédé selon l'une quelconque des revendications 13 à 15, **caractérisé par** l'utilisation d'entraîneurs (10) qui sont configurés pour entrer en prise par le côté dans le compartiment (1) respectif.

17. Procédé selon l'une quelconque des revendications 13 à 15, **caractérisé par** l'utilisation d'entraîneurs (10) qui sont configurés pour entrer en prise par le bas dans le compartiment (1) respectif.

18. Procédé selon l'une quelconque des revendications 13 à 15, **caractérisé par** l'utilisation d'entraîneurs (10) qui sont configurés pour entrer en prise par le haut dans le compartiment (1) respectif.
